# EUROPÄISCHE PATENTANMELDUNG

(11) **EP 3 272 447 A1**
(43) Veröffentlichungstag der Anmeldung: **24.01.2018**
(21) Anmeldenummer: 17179918.2
(22) Anmeldetag: 06.07.2017
(51) Int. Cl.: B23C 5/10

(54) **FRÄSWERKZEUG**

(30) Priorität: 19.07.2016 DE 102016113270
(71) Anmelder: Wendling, Rudolf, 93333 Neustadt an der Donau (DE)
(72) Erfinder: Wendling, Rudolf, 93342 Saal/Donau (DE)
(74) Vertreter: Hannke, Christian

(57) **Zusammenfassung**

Die Erfindung betrifft ein Fräswerkzeug (1) zum spanenden Bearbeiten von Werkstücken mit einem als Rotationskörper ausgebildeten Grundkörper (2), umfassend genau eine erste (3) und genau eine zweite Schneide (4), welche jeweils sich zumindest teilweise spiralförmig um eine Rotationsachse (6) des Grundkörpers (2) in jeweils einem ersten oder zweiten Abschnitt (L3, L4) eines Werkzeugschneidenbereichs (2a) des Grundkörpers (2) erstreckend ausgebildet sind, wobei eine (4) der Schneiden (3, 4) linksspiralig und eine andere (3) der Schneiden (3, 4) rechtsspiralig verlaufend ausgestaltet ist, wobei in Richtung der Rotationsachse (6) des Grundkörpers (2) eine zweite Länge (24) des der zweiten Schneide (4) zugeordneten zweiten Abschnitts (L4) größer ist als eine erste Länge (23) des der ersten Schneide (3, 4) zugeordneten ersten Abschnitts (L3), wobei der erste Abschnitt (L3) in Richtung der Rotationsachse (6) des Grundkörpers (2) sich vollständig innerhalb des zweiten Abschnitts (L4) erstreckend angeordnet ist.

## Beschreibung

Die vorliegende Erfindung bezieht sich auf ein Fräswerkzeug bzw. Fräserwerkzeug zum spanenden Bearbeiten von Körpern gemäß dem Oberbegriff des unabhängigen Patentanspruches 1. Derartige Fräserwerkzeuge werden überwiegend auf Roboterfräszellen und auf CNC-Fräsen zum Bearbeiten von beispielsweise Nichtmetallen, wie Kunststoffen, Holz, Glasfaser, Carbon und ähnlichem verwendet.

Ebenfalls werden sie zur Bearbeitung von Verbundwerkstoffen aus Polyurethanschaum (PUR) und Polypropylen (PP) verwendet. Derartige Verbundwerkstoffe bestehen beispielsweise aus einem plattenförmigen, relativ harten Trägerelement aus PP, auf welchem ein relativ weiches Deckelement aus PUR aufgeschäumt ist. Derartige PUR-Elemente bilden nach dem Aushärten an der Oberfläche eine Art Hautschicht aus.

In Bezug auf die Art, wie ein Fräswerkzeug zerspantes Material von der Bearbeitungsstelle entfernt oder abtransportiert, lassen sich prinzipiell eine schiebende und eine ziehende Variante des Fräswerkzeugs unterscheiden. Es wird im Folgenden der Fall betrachtet, dass das Fräswerkzeug bei einem oben beschriebenen Werkstück senkrecht zur Werkstückoberfläche steht und die Zustellung (Bearbeitung) in Richtung seiner Werkzeug- oder auch Rotationsachse erfolgt. Dies wird vom Fachmann durch den Begriff "Stirnfräsen" beschrieben.

Wenn bei der Kunststoffbearbeitung das Werkstück komplett durchtrennt, also in Zustellrichtung auf seiner gesamten Höhe durchbohrt wird und bei der Bearbeitung auf dem Trägerelement aufliegt, wird in diesem ersten Fall in der Regel ein schiebendes Fräswerkzeug verwendet. Wenn das Werkstück komplett durchtrennt wird und auf der Hautschicht aufliegt, wird in diesem zweiten Fall in der Regel ein ziehendes Fräswerkzeug verwendet.

Unter dem Begriff "Aufsatzfräsung" ist generell der dritte Fall zu verstehen, welcher vorsieht, dass das Werkstück zwar auf dem Trägerelement aufliegt, jedoch nicht komplett durchgebohrt wird. Das bedeutet, dass die Späne nicht in Zustellrichtung abgeführt werden können, sondern entgegengesetzt zu dieser abgeführt werden müssen. In diesem Fall wird ein sogenanntes Dualschnittfräswerkzeug zwingend benötigt, wie es weiter unten noch beschrieben wird.

Während ein ziehendes Fräswerkzeug das zerspante Material im Wesentlichen entgegengesetzt zur Zustellrichtung entfernt, drückt ein schiebendes Fräswerkzeug das zerspante Material im Wesentlichen in Zustellrichtung weg. Über die Art des Fräswerkzeugs entscheidet beispielsweise die Ausgestaltung der Schneiden des Fräswerkzeugs.

Beim spanenden Bearbeiten von Werkstücken aus einem Verbundwerkstoff wie beschrieben muss allerdings darauf geachtet werden, dass die Hautschicht durch das Fräswerkzeug nicht zerrissen wird und ausfranst. Für den beschriebenen Verbundwerkstoff wäre also ein rein ziehendes Fräswerkzeug ungeeignet.

Wird ein schiebendes Fräswerkzeug eingesetzt, besteht allerdings die Gefahr, dass das zerspante Material ("Span") sich vor dem Fräswerkzeug staut und dessen Bewegung in Zustellrichtung behindert. Hierfür ist die Gefahr im harten PP-Trägerelement wesentlich größer als im weichen PUR- Deckelement. Die im Gegensatz zu Metallen relativ geringe Wärmeleitfähigkeit von Kunststoffen führt nämlich dazu, dass die durch die Reibung zwischen Fräswerkzeug und Werkstück auftretende Wärme nicht so schnell abgeführt werden kann. Im schlimmsten Fall entsteht ein Wärmestau, dessen Energie das Trägerelement unerwünscht zum Schmelzen bringt.

Auch ein Fräswerkzeug mit gerade verlaufenden, mithin zur Rotationsachse parallel angeordneten Spannuten wäre hier ungeeignet, da er das Material nur unkontrolliert vor sich her schiebt und durch den resultierenden Materialstau schnell abstumpfen würde.

Es sind aus dem Stand der Technik sogenannte Dualschnittfräswerkzeuge bekannt. Diese weisen meist vier oder mehr Schneiden auf, wobei beispielsweise zwei davon linksschneidend und die anderen zwei rechtsschneidend ausgebildet sind. Beispielsweise sind zwei davon linksspiralig und die anderen zwei rechtsspiralig ausgebildet. Generell ist bekannt, dass bei einem derartigen Fräswerkzeug sich jeweils zwei gleichgerichtete Schneiden in Bezug auf den Querschnitt des Fräswerkzeugs gegenüberliegen. So weisen die beiden linksschneidenden Schneiden zueinander einen Abstand in Umfangsrichtung von 180° auf; gleiches gilt für die beiden rechtsschneidenden Schneiden. Beispielsweise ist somit in Umfangsrichtung stets ein Abstand von 90° zwischen zwei Schneiden, so dass zum Beispiel bei einem Querschnitt im Überlappungsbereich der beiden Schneidenpaare die erste linksschneidende Schneide bei einer Position von 0°, die erste rechtsschneidende Schneide bei einer Position von 90°, die zweite linksschneidende Schneide bei einer Position von 180° und die zweite rechtsschneidende Schneide bei einer Position von 270° angeordnet sind.

Im Sinne der Erfindung wird unter zwei "gleichgerichteten" Schneiden verstanden, dass diese die gleiche Richtung aufweisen, also entweder beide linksspiralig oder beide rechtsspiralig ausgestaltet sind. Analog dazu wird unter zwei "gegengerichteten" Schneiden verstanden, dass diese eine unterschiedliche Richtung aufweisen, also eine davon linksspiralig und die andere davon rechtsspiralig ausgestaltet ist.

Unter einem "rechtsschneidenden" Fräswerkzeug wird erfindungsgemäß verstanden, dass eine oder mehrere der Schneiden nur bei einer Rechtsrotation des mit dem Werkstück in Eingriff stehenden Fräswerkzeugs ihre beabsichtigte Schneidwirkung entfalten. Analog wird unter einem "linksschneidenden" Fräswerkzeug erfindungsgemäß verstanden, dass eine oder mehrere der Schneiden nur bei einer Linksrotation des mit dem Werkstück in Eingriff stehenden Fräswerkzeugs ihre beabsichtigte Schneidwirkung entfalten. Mit dem Begriff "rechtsspiralig" wird erfindungsgemäß beschrieben, dass eine oder mehrere Schneiden sich ausgehend vom Werkzeugspannbereich in axialer Richtung gesehen nach rechts spiralisieren. Analog wird mit dem Begriff "linksspiralig" erfindungsgemäß beschrieben, dass eine oder mehrere Schneiden sich ausgehend vom Werkzeugspannbereich in axialer Richtung gesehen nach links spiralisieren.

Es können also das eine Paar der gleichspiraligen Schneiden eine erste ziehende Funktion und das andere Paar der gleichspiraligen Schneiden eine zweite schiebende Funktion übernehmen. Allerdings weisen die bislang bekannten Dualschnittfräswerkzeuge den Nachteil auf, dass zumindest ein Paar der gleichspiralig ausgebildeten Schneiden relativ kurz ausgebildet ist, was dazu führt, dass der genannte Vorteil und die Doppelfunktion nur auf einem kurzen Abschnitt in Längsrichtung des Fräswerkzeugs vorhanden ist.

Wenn beim spanenden Bearbeiten des jeweiligen Werkstücks der Span nicht mit ausreichend hoher Geschwindigkeit aus der Frässtelle abgeführt werden kann, erfolgt im schlechtesten Fall ein Verstopfen bzw. Blockieren des Fräsers. Ebenfalls können unerwünschte Ausrisse an der Werkstückoberfläche entstehen.

Der vorliegenden Erfindung liegt demnach die Aufgabe zugrunde, ein Fräserwerkzeug bereitzustellen, welches derart ausgebildet ist, dass selbst bei der Bearbeitung von Werkstücken aus Verbundwerkstoffen wie beschrieben eine qualitativ hochwertige Oberfläche entsteht. Gleichzeitig soll die Standzeit des Fräswerkzeugs erhöht werden.

Die Aufgabe der Erfindung wird gelöst durch ein Fräswerkzeug zum spanenden Bearbeiten von Werkstücken mit einem als Rotationskörper ausgebildeten Grundkörper, umfassend genau eine erste und genau eine zweite Schneide, welche jeweils sich zumindest teilweise spiralförmig um eine Rotationsachse des Grundkörpers in jeweils einem ersten oder zweiten Abschnitt eines Werkzeugschneidenbereichs des Grundkörpers erstreckend ausgebildet sind, wobei eine der Schneiden linksspiralig und eine andere der Schneiden rechtsspiralig verlaufend ausgestaltet ist, wobei in Richtung der Rotationsachse des Grundkörpers eine zweite Länge des der zweiten Schneide zugeordneten zweiten Abschnitts größer ist als eine erste Länge des der ersten Schneide zugeordneten ersten Abschnitts, wobei der erste Abschnitt in Richtung der Rotationsachse des Grundkörpers sich vollständig innerhalb des zweiten Abschnitts erstreckend angeordnet ist.

Die vorliegende Erfindung beschreibt beispielsweise einen Schaftfräser, also ein Fräswerkzeug, bei welchem der Durchmesser im Verhältnis zur Werkzeuglänge oder zum Werkzeugschneidenbereich gering ist. Dabei stellt der Werkzeugschneidenbereich den Bereich in Längsrichtung des Fräswerkzeugs dar, welcher sich von einer Stirnfläche bis zum Werkzeugspannbereich erstreckt und in welchem Umfangsschneiden angeordnet sind. Der Werkzeugspannbereich wiederum ist ein axialer Bereich des Fräswerkzeugs, welcher zumindest teilweise dazu vorgesehen ist, in eine Werkzeugspannvorrichtung der Werkzeugmaschine eingespannt zu werden, und erstreckt sich vom Ende des Werkzeugschneidenbereichs bis zum der Stirnfläche gegenüberliegenden Ende des Fräswerkzeugs.

Durch die vorstehende Ausgestaltung ist sichergestellt, dass die Doppelfunktion wie oben beschrieben auf einem möglichst langen Abschnitt des Fräswerkzeugs in Bezug auf die Zustellrichtung ausgenutzt werden kann. Damit ist für eine optimale Span- und Wärmeabfuhr gesorgt, welche eine lange Standzeit des Fräswerkzeugs ermöglichen.

Vorteilhaft ist das erfindungsgemäße Fräswerkzeug bis auf die genau eine erste und die genau eine zweite Schneide ansonsten frei von weiteren Schneiden. Sind nämlich gegenspiralige Schneiden auf einem Fräswerkzeug angeordnet, so muss beachtet werden, dass diese sich je nach Größe des Spiralwinkels zwangsläufig auf einer bestimmten Höhe der Rotationsachse überkreuzen. Je höher die Anzahl der Schneiden insgesamt, desto weniger Platz steht in Umfangsrichtung (Radialrichtung) des Fräswerkzeugs für deren Ausgestaltung zur Verfügung.

Wie oben beschrieben kann dabei die erste Schneide linksspiralig und die zweite Schneide rechtsspiralig sein. Ebenfalls ist es möglich, dass die erste Schneide rechtsspiralig und die zweite Schneide linksspiralig ist.

Ein Fräswerkzeug mit lediglich zwei Schneiden bietet also den Vorteil, dass der erste Abschnitt, dessen Länge in Richtung der Rotationsachse ja erfindungsgemäß den Überlappungsbereich von erster und zweiter Schneide bestimmt, möglichst lang gewählt werden kann.

Gleichzeitig weist das Fräswerkzeug aber eben nicht nur eine Schneide auf. Die Anordnung nur einer Schneide kann nämlich beim Fräsen von thermoplastischen Kunststoffen zu einer Erhöhung der Größe bzw. der Dicke des abgetragenen Spans führen. Dann wiederum besteht die Gefahr, dass die Wärmeabfuhr nicht ausreichend hoch ist und das Werkstück schmilzt. Insbesondere könnten auch Ausrisse am Werkstück und/oder am Fräswerkzeug auftreten.

In der Praxis hat es sich beim Bearbeiten der beschriebenen Verbundwerkstoffe als vorteilhaft herausgestellt, wenn ein Vorschub von 3 m/min und eine Drehzahl von 20.000 bis 30.000 rpm, bevorzugt von 25.000 rpm gewählt werden. Des Weiteren werden derartige Verbundwerkstoffe bevorzugt trocken, also ohne Schmierstoffe, spanend bearbeitet.

Ferner hat es sich bewährt, wenn die erste und/ oder die zweite Schneide mit einem Spiralwinkel aus einem Bereich von 5 bis 30°, bevorzugt von 10° ausgestaltet sind. Der Spiralwinkel ist dabei der Winkel zwischen der Rotationsachse des Fräswerkzeugs und dem Verlauf der jeweiligen Schneide, betrachtet in einer Seitenansicht des Fräswerkzeugs parallel zur Rotationsachse.

Um bereits beim Eintauchen in das Werkstück die Doppelfunktion ausnutzen zu können, ist es vorteilhaft, wenn der erste Abschnitt und/ oder der zweite Abschnitt an eine Stirnfläche im Werkzeugschneidenbereich des Fräswerkzeugs angrenzend angeordnet sind.

Weiter ist es vorteilhaft, wenn in Bezug auf die Rotationsachse ein erster Startpunkt der ersten Schneide und ein zweiter Startpunkt der zweiten Schneide auf gleicher Höhe angeordnet sind. Der erste und der zweite Startpunkt sind dabei jeweils am oberen Ende, also am der Stirnfläche zugewandten Ende der Schneiden angeordnet. Mit anderen Worten existiert vorteilhaft eine virtuelle, zur Rotationsachse senkrechte Gerade, auf welcher ein Punkt der Rotationsachse, der erste Startpunkt und der zweite Startpunkt liegen. Dies sorgt für mehr Stabilität des Fräswerkzeugs.

Ebenfalls hat es sich bewährt, wenn an einer Grenze zur Stirnfläche die Rotationsachse, der erste Startpunkt und der zweite Startpunkt auf einer gemeinsamen Ebene angeordnet sind. Mit anderen Worten bilden vorteilhaft zwei Geraden, welche zum einen den Abstand zwischen der Rotationsachse und dem ersten Startpunkt und zum anderen den Abstand zwischen der Rotationsachse und dem zweiten Startpunkt repräsentieren, zueinander einen Winkel von 180°. Es sind also hier im Gegensatz zum Stand der Technik nicht zwei gegengerichtete, sondern zwei gleichgerichtete Schneiden gegenüber.

In der Praxis hat es sich als vorteilhaft herausgestellt, wenn der zweite Abschnitt sich in Richtung der Rotationsachse über eine Länge des gesamten Werkzeugschneidenbereichs erstreckend angeordnet ist. Somit lassen sich auch in Zustellrichtung sehr tiefe Werkstücke effizient bearbeiten und die Späne leicht abführen.

Es hat sich als vorteilhaft herausgestellt, wenn der ersten Schneide eine erste Spannut und der zweiten Schneide eine zweite Spannut zugeordnet ist, welche in Drehrichtung des Fräswerkzeugs den Schneiden jeweils unmittelbar vorgeordnet sind.

Erfindungsgemäß ist die zweite Schneide wie oben beschrieben in Axialrichtung des Fräswerkzeugs länger ausgestaltet als die erste Schneide. Vorzugsweise ist die zweite Schneide und/ oder die zweite Spannut zumindest an ihrem jeweiligen der Stirnfläche des Fräswerkzeugs abgewandten Ende durch die erste Schneide oder durch die Spannut der ersten Schneide begrenzt. Vorteilhaft ist das Fräswerkzeug bis auf die erste und die zweite Spannut ansonsten frei von weiteren Spannuten.

Es hat sich in der Praxis als vorteilhaft herausgestellt, wenn eine erste Tiefe der ersten Spannut und eine zweite Tiefe der zweiten Spannut zumindest an der Grenze zur Stirnfläche gleich sind.

Um sicherzugehen, dass die Spannut der ersten Schneide ausreichend groß dimensioniert wird und den Span schnell abführen kann, hat es sich in der Praxis bewährt, wenn die Spannut der ersten Schneide sich zumindest an der Grenze zur Stirnfläche in Umfangsrichtung um ein 1- bis 2-faches Vielfaches, bevorzugt um ein 1,2-faches Vielfaches weiter erstreckt als die Spannut der zweiten Schneide.

Dieser Grad der Erstreckung in Umfangsrichtung lässt sich bevorzugt über die Bestimmung eines Öffnungswinkels der Nuten bestimmen. Dabei werden in einer Querschnittsansicht des Fräswerkzeugs die Verbindungslinien zwischen dem Mittelpunkt bzw. zwischen der Rotationsachse des Fräswerkzeugs zu den am weitesten außen liegenden Punkten der Nuten eingezeichnet und der Winkel zwischen den beiden resultierenden Verbindungslinien gemessen. Beispielsweise beträgt der Öffnungswinkel der ersten Spannut 80 bis 100°, bevorzugt 90°, und der Öffnungswinkel der zweiten Spannut 100° bis 120°, bevorzugt 105°.

Um ein Eintauchen in das Werkstück möglichst einfach zu gestalten, ist es vorteilhaft, wenn ein erster Durchmesser eines der ersten Schneide zugeordneten ersten Flugkreises gleich groß ist wie ein zweiter Durchmesser eines der zweiten Schneide zugeordneten zweiten Flugkreises.

Im Sinne der Erfindung wird der Ausdruck "Flugkreis" oder "Teilkreis" für den virtuellen Kreis verwendet, welcher im Querschnitt des Fräswerkzeugs betrachtet durch die Rotationsachse des Fräswerkzeugs als Mittelpunkt und durch den äußersten Punkt der jeweiligen Schneide als Begrenzung des Radius' definiert ist. Dabei ist der Querschnitt des Fräswerkzeugs senkrecht zur Mittelachse des Fräswerkzeugs zu betrachten.

Ebenfalls hat es sich in der Praxis bewährt, wenn der erste und/ oder der zweite Durchmesser einen Wert aus einem Bereich von 2 bis 14 mm, bevorzugt von 2 bis 8 mm, besonders bevorzugt von 2, 4, 6 oder 8 mm aufweist.

Beispielsweise hat es sich bewährt, wenn bei einem Fräswerkzeug mit einem Flugkreis beider Schneiden von 6 mm die erste Tiefe und die zweite Tiefe an der Grenze zur Stirnfläche einen Wert aus einem Bereich von 1,5 bis 2 mm, bevorzugt von 1,8 mm aufweisen. Bevorzugt ist dabei die erste Tiefe über die Länge des Fräswerkzeugs sich zumindest abschnittsweise verringernd, bevorzugt sich gleichmäßig verringernd ausgestaltet. Beispielsweise weist die zweite Schneide, welche beispielsweise an ihrem der Stirnfläche zugewandten oberen Ende wie oben beschrieben mit einer Tiefe von 1,8 mm ausgestaltet ist, an ihrem der Stirnfläche abgewandten unteren Ende eine zweite Tiefe von 1,2 mm auf.

Das erfindungsgemäße Fräswerkzeug kann weiterhin das Merkmal aufweisen, wonach das Verhältnis aus dem Öffnungswinkel der zweiten Spannut zur Tiefe der zweiten Spannut kleiner ist als das Verhältnis aus dem Öffnungswinkel der ersten Spannut zur Tiefe der ersten Spannut.

Um das Eintauchen in eine Werkstückoberfläche zu erleichtern, hat es sich als vorteilhaft herausgestellt, wenn das Fräswerkzeug im Werkzeugschneidenbereich eine Stirnfläche aufweist, die zumindest abschnittsweise gegenüber einer sich rechtwinklig zur Rotationsachse erstreckenden Ebene geneigt ausgebildet ist.

Dabei ist es denkbar, dass einzelne Anteile der geneigten Stirnfläche eben oder kurvenförmig ausgebildet sind und sich in Richtung oder entgegen einer Längsrichtung des Grundkörpers oder in Richtung einer Radialrichtung des Grundkörpers erstrecken.

Vorliegend ist es allerdings vorteilhaft, wenn die Stirnfläche zumindest abschnittsweise, bevorzugt zur Gänze gegenüber der Rotationsachse senkrecht angeordnet ist. Wenn ebenfalls beide Startpunkte der Schneiden auf einer Höhe liegen und unmittelbar an der Grenze zur Stirnfläche angeordnet sind, sind beide Startpunkte der Schneiden folglich am oberen Ende des Fräswerkzeugs, welches dem durch den Werkzeugspannbereich ausgebildeten unteren Ende des Fräswerkzeugs entgegenliegt, angeordnet.

Ferner hat es sich als vorteilhaft herausgestellt, wenn das Fräswerkzeug zumindest anteilig aus mindestens einem der Werkstoffe ausgewählt aus der Gruppe zumindest bestehend aus Schnellarbeitsstahl (HSS), Hartmetall, Cermet und/oder ähnlichem besteht.

Eine weitere Ausführungsform sieht vor, dass das Fräswerkzeug nicht zylindrisch, sondern konisch ausgebildet ist und dabei von Spitze zu Schaft, mithin vom Werkzeugschneidenbereich bis zum Werkzeugspannbereich, sich verbreiternd ausgebildet ist.

Die Schneiden können gemäß einem weiter bevorzugten Ausführungsbeispiel auch mit unterschiedlichen Spiralsteigungswinkeln ausgebildet sein, um harmonische Schwingungsanregungen zu vermeiden. Gemäß einer weiteren bevorzugten Ausführungsform lässt sich die Wuchtgüte erhöhen, indem die Tiefen der Spannuten der Schneiden zumindest in einem geringen Maße unterschiedlich zueinander ausgestaltet sind.

Vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen.

Es zeigen:
- Fig. 1: eine Seitenansicht des erfindungsgemäßen Fräswerkzeugs;
- Fig. 2: eine Querschnittsansicht des erfindungsgemäßen Fräswerkzeugs;
- Fig. 3, 4: perspektivische Darstellungen des erfindungsgemäßen Fräswerkzeugs.

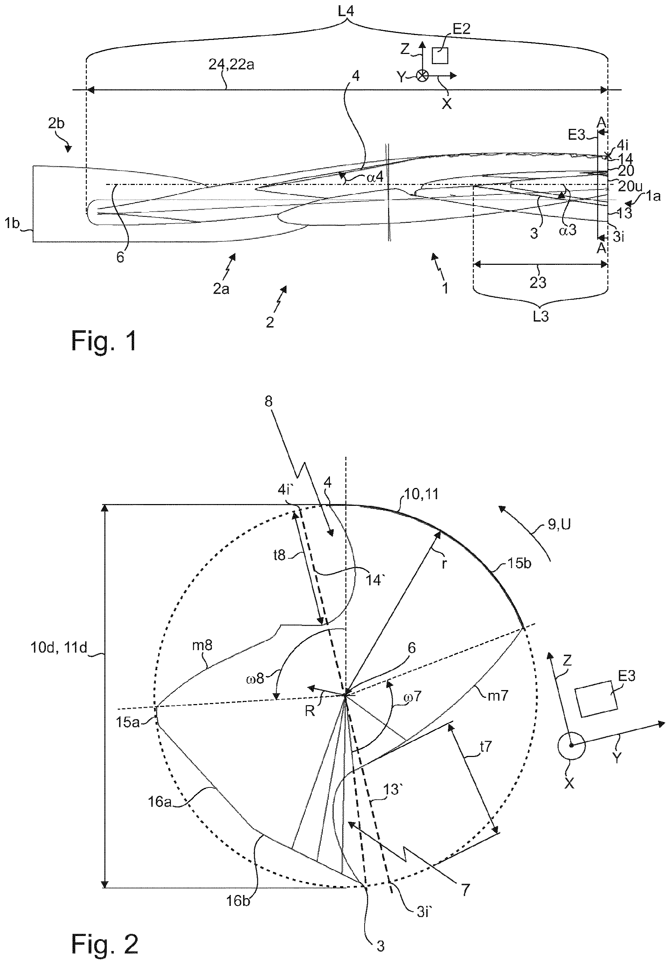

Gemäß der Fig. 1 ist das erfindungsgemäße Fräswerkzeug 1 zum spanenden Bearbeiten von Werkstücken in einer Seitenansicht zu sehen, wobei die gezeigten Rotationsachse 6 in der Papierebene angeordnet ist. Der Grundkörper 2 des erfindungsgemäßen Fräswerkzeugs 1 ist jeweils in einen Werkzeugschneidenbereich 2a, welcher ein erstes Ende 1a des Fräswerkzeugs 1 ausbildet, und einen Werkzeugspannbereich 2b, welcher ein zweites Ende 1b des Fräswerkzeugs 1 ausbildet, unterteilt.

Zur besseren Übersicht ist ein Koordinatensystem mit den Achsen x, y, z eingezeichnet. Die Achse x verläuft dabei definitionsgemäß parallel zur Rotationsachse 6. Die Achse z verläuft senkrecht zur Achse x sowie parallel zu einer gedachten Linie, welche durch den Punkt 4i und durch die Rotationsachse 6 verläuft. Die Achse y verläuft senkrecht zu beiden Achsen x, z.

Das gezeigte Fräswerkzeug 1 weist einen als Rotationskörper ausgebildeten Grundkörper 2 auf und umfasst genau eine erste 3 und genau eine zweite Schneide 4, welche jeweils sich zumindest teilweise spiralförmig um die Rotationsachse 6 des Grundkörpers 2 in jeweils einem ersten L3 oder zweiten Abschnitt L4 eines Werkzeugschneidenbereichs 2a des Grundkörpers 2 erstreckend ausgebildet sind. Die erste Schneide 3 erstreckt sich im ersten Abschnitt L3 und die zweite Schneide 4 erstreckt sich im zweiten Abschnitt L4.

Zwischen den Schneiden 3, 4 und der Rotationsachse 6 ist jeweils ein Spiralwinkel α3, α4 angeordnet. Vorliegend weist der erste Spiralwinkel α3 einen Wert von -10° und der zweite Spiralwinkel α4 einen Wert von 10° auf. Der Betrag des Wertes der Spiralwinkel α3, α4 ist also jeweils gleich.

In Richtung der Rotationsachse 6 des Grundkörpers 2 bzw. projiziert auf diese ist eine zweite Länge 24 des der zweiten Schneide 4 zugeordneten zweiten Abschnitts L4 größer als eine erste Länge 23 des der ersten Schneide 3, 4 zugeordneten ersten Abschnitts L3. Beispielsweise weist die Länge 23 einen Wert aus einem Bereich von 10 bis 20 mm, bevorzugt von 15 mm auf. Beispielsweise weist die Länge 24 einen Wert aus einem Bereich von 40 bis 60 mm, bevorzugt von 48 mm auf.

In einem bevorzugten Ausführungsbeispiel beträgt ein Verhältnis zwischen der zweiten Länge 24 und der ersten Länge 23 einen Wert aus einem Bereich von 2,5 bis 4, bevorzugt von 3,2.

Der erste Abschnitt L3 und der zweite Abschnitt L4 sind vorliegend an eine Stirnfläche 20 im Werkzeugschneidenbereich 2a des Fräswerkzeugs 1 angrenzend angeordnet. Mit anderen Worten beginnen beide Schneiden 3, 4 unmittelbar an der Grenze 20u zur Stirnfläche 20. Der zweite Abschnitt L4 ist sich in Richtung der Rotationsachse 6 über eine Länge 22a des gesamten Werkzeugschneidenbereichs 2a erstreckend angeordnet. Somit weist die Länge 22a vorliegend den gleichen Wert auf wie die Länge 24.

Dabei ist eine 4 der Schneiden 3, 4, vorliegend die zweite Schneide 4 linksspiralig und eine andere 3 der Schneiden 3, 4, vorliegend die erste Schneide 3 rechtsspiralig verlaufend ausgestaltet. Es wäre natürlich auch möglich, dass sich die zweite Schneide sich rechtsspiralig verlaufend und die erste Schneide 3 sich linksspiralig verlaufend erstreckt.

Ferner sind in Bezug auf die Rotationsachse 6 ein erster Startpunkt 3i der ersten Schneide 3 und ein zweiter Startpunkt 4i der zweiten Schneide 4 auf gleicher Höhe angeordnet; und zwar vorliegend am ersten Ende 1a des Fräswerkzeugs 1, welches dem zweiten Ende 1b gegenüberliegend angeordnet ist. Zusätzlich sind an einer Grenze 20u zur Stirnfläche 20 die Rotationsachse 6, der erste Startpunkt 3i und der zweite Startpunkt 4i auf einer gemeinsamen Ebene E2 angeordnet. Die Achsen x und z spannen diese Ebene E2 auf.

Die Stirnfläche 20 ist vorliegend zumindest abschnittsweise gegenüber der Rotationsachse 6 senkrecht angeordnet. Zumindest zwei virtuelle Verbindungslinien 13 und 14 (siehe auch deren Projektionen 13' und 14' gemäß Fig. 2), welche zum einen den Abstand zwischen der Rotationsachse 6 und dem ersten Startpunkt 3i und zum anderen den Abstand zwischen der Rotationsachse 6 und dem zweiten Startpunkt 4i darstellen, sind jedoch senkrecht zur Rotationsachse 6 angeordnet.

Es kann auch vorteilhaft sein, wenn die beiden genannten Verbindungslinien 13, 14 miteinander einen Winkel in einem Bereich von 160° bis kleiner als 180° bilden und ausgehend von den beiden Startpunkten 3i, 4i sich zur Rotationsachse und zum zweiten Ende 1b hinweisend ausgerichtet sind. Es bildet aber zumindest einer der beiden Startpunkte 3i, 4i, bevorzugt beide den in Richtung der x-Achse äußersten Punkt des Fräswerkzeugs 1 am ersten Ende 1a aus.

Wie aus der Fig. 1 zu sehen ist, ist der erste Abschnitt L3 in Richtung der Rotationsachse 6 des Grundkörpers 2 sich vollständig innerhalb des zweiten Abschnitts L4 erstreckend angeordnet.

Das vorliegende Fräswerkzeug 1 besteht zumindest anteilig aus mindestens einem der Werkstoffe ausgewählt aus der Gruppe zumindest bestehend aus Schnellarbeitsstahl (HSS), Hartmetall, Cermet und/oder ähnlichem.

Die vorliegende Fig. 2 zeigt eine Querschnittsansicht entlang der Linie A-A aus Fig. 1, wobei die Linie A-A die Position der für die Fig. 2 verwendeten Querschnittsebene E3 repräsentiert. Diese Ebene E3 verläuft parallel zu einer Ebene, welche mittels der Achsen y und z aufgespannt ist. Gleichzeitig ist sie von den Startpunkten 3i, 4i um etwa -2 mm in Richtung der x-Achse beabstandet.

Da die Startpunkte 3i, 4i der Schneiden 3, 4 in dieser Ansicht nicht zu sehen sind, wurden diese zur Veranschaulichung parallel zur Rotationsachse 6 auf die Querschnittsebene E3 projiziert und als projizierte Startpunkte 3i', 4i' veranschaulicht. Die projizierten Verbindungslinien 13', 14' stellen den Abstand zwischen der Rotationsachse 6 und dem projizierten ersten Startpunkt 3i' bzw. dem projizierten zweiten Startpunkt 4i' dar.

Die in Radialrichtung R des Fräswerkzeugs 1 am weitesten außen liegenden Punkte bzw. Spitzen der Schneiden 3, 4 liegen alle auf einem gemeinsamen virtuellen Kreis, welcher Flugkreis 10, 11 oder auch Teilkreis genannt wird und den Flugkreisdurchmesser 10d, 11 d aufweist. Die Umfangsrichtung U des Fräswerkzeugs ist vorliegend gleichzusetzen mit der Rotationsrichtung des Fräswerkzeugs 1 bei der Bearbeitung des Werkstücks (Drehrichtung 9) und entspricht in diesem Beispiel einer Richtung gegen den Uhrzeigersinn.

Es ist aus der Fig. 2 zu entnehmen, dass der ersten Schneide 3 eine erste Spannut 7 und der zweiten Schneide 4 eine zweite Spannut 8 zugeordnet ist, welche in Drehrichtung 9 des Fräswerkzeugs 1 den Schneiden 3, 4 jeweils unmittelbar vorgeordnet sind.

Der Begriff "vorgeordnet" beschreibt im Sinne der Erfindung die Position eines Elements, welches im Querschnitt des Fräswerkzeugs 1 betrachtet in Umfangsrichtung vor einem anderen Element angeordnet ist. Dementsprechend beschreibt der Begriff "nachgeordnet" im Sinne der Erfindung die Position eines Elements, welches im Querschnitt des Fräswerkzeugs betrachtet in Umfangsrichtung nach einem anderen Element angeordnet ist. Mit anderen Worten dreht bei der Bearbeitung das vorgeordnete Element eher an der Werkstückoberfläche vorbei als das nachgeordnete Element.

Vorliegend ist eine erste Tiefe t7 der ersten Spannut 7 und eine zweite Tiefe t8 der zweiten Spannut 8 zumindest an der Grenze 20u zur Stirnfläche 20 gleich.

Ebenfalls zu sehen ist, dass ein erster Durchmesser 10d eines der ersten Schneide 3 zugeordneten ersten Flugkreises 10 gleich groß ist wie ein zweiter Durchmesser 11 d eines der zweiten Schneide 4 zugeordneten zweiten Flugkreises 11.

Die Spannuten 7, 8 weisen jeweils einen Öffnungswinkel ω7, ω8 auf. Es wird angenommen, dass ein Verlauf dieser Öffnungswinkel ω7, ω8 in Richtung der x-Achse zumindest im Bereich zwischen der Stirnfläche 20 und der Ebene E3 jeweils konstant ist. Die Tiefen t7, t8 der Spannut 7, 8 beschreiben jeweils die kürzeste Verbindung zwischen einem in Radialrichtung R am weitesten in Richtung der Rotationsachse 6 liegenden Punkt der gezeigten Mantelflächen m7, m8 der Spannuten 7, 8 und dem Flugkreis 10, 11.

Vorliegend beträgt ein Wert des Öffnungswinkels ω7 etwa 105° und ein Wert des Öffnungswinkels ω8 etwa 90°. Somit erstreckt sich die Spannut 7 vorliegend in Umfangsrichtung U etwa um das 1,2-fache weiter als die Spannut 8. Die Tiefen t7, t8 der Spannuten 7, 8 sind vorliegend in etwa gleich, betragen aber mindestens 50% des Radius' r des Fräswerkzeugs 1. Vorliegend betragen sie etwa 60% des Radius' r.
Beim erfindungsgemäßen Fräswerkzeug 1 ist die gezeigte Rotationsachse 6 jeweils außerhalb einer Spannut 7, 8 und auch außerhalb einer sonstigen Ausnehmung des Fräswerkzeugs 1 angeordnet. Die Rotationsachse 6 ist also Teil des Werkstoffs des Fräswerkzeugs 1 bzw. innerhalb eines Vollkörpers des Grundkörpers 2 verlaufend angeordnet.

In Umfangsrichtung U des Fräswerkzeugs 1 sind also folgende Elemente unmittelbar einander nachfolgend angeordnet: zweite Schneide 4, zweite Spannut 8, ein erster kreisbogenförmiger Übergangsabschnitt 15a, ein erster geradliniger Übergangsabschnitt 16a, ein zweiter geradliniger Übergangsabschnitt 16b, erste Schneide 3, erste Spannut 7 sowie ein zweiter kreisbogenförmiger Übergangsabschnitt 15b, auf den dann die eingangs erwähnte zweite Schneide 4 folgt.

In Umfangsrichtung U nachfolgend zu den Schneiden 3, 4 können gemäß einer weiteren vorteilhaften Ausbildung sich zumindest teilweise spiralförmig um die Rotationsachse 6 des Grundkörpers 2 erstreckende Entlastungsnuten (nicht gezeigt) angeordnet sein, welche dazu vorgesehen sind, bei der Bearbeitung des Werkstücks durch das Fräswerkzeug den Druck von der jeweiligen Schneide 3, 4 zu nehmen. Insbesondere ist es vorteilhaft, der jeweiligen Schneide 3, 4 zumindest eine Entlastungsnut vorzuordnen. Vorteilhaft erstreckt sich in Längsrichtung x des Fräswerkzeugs 1 diese mindestens eine Entlastungsnut zumindest oder genau über die gesamte Länge der jeweiligen zu ihr gehörenden Schneide 3, 4. Weiter vorteilhaft weist diese mindestens eine Entlastungsnut nur eine geringe Tiefe auf, die beispielsweise einem Fünftel bis zu einem Zehntel der Tiefe der Spannut 7, 8 der jeweiligen Schneide 3, 4 und/ oder einem Wert von unter 0,5 mm bei einem Flugkreisdurchmesser 10, 11 von 6 mm entspricht. Beispielsweise sind der Schneide 4 im Übergangsabschnitt 15b eine, bevorzugt mehrere Entlastungsnuten nachgeordnet, weiter bevorzugt in regelmäßigen Abständen über den gesamten Übergangsabschnitt 15b. Beispielsweise ist der Schneide 3 im Übergangsabschnitt 16b genau eine Entlastungsnut nachgeordnet.

Ein erfindungsgemäßes Fräswerkzeug 1 wird also beispielweise folgendermaßen gefertigt: Zunächst wird die eine zweite Spannut 8 im als Rotationskörper ausgebildeten Grundkörper 2 spiralförmig ausgebildet, und zwar mittels eines ersten Werkzeugs zur spanenden Bearbeitung.

Die genau eine zweite Schneide 4 wird im Bereich eines Übergangs zwischen der Spannut 8 und einer Umfangsfläche des Grundkörpers 2 ebenfalls mittels des ersten Werkzeugs ausgebildet.

Auf die gleiche Weise wie die zweite Spannut 8 und die zweite Schneide 4 werden dann die erste Spannut 7 und die erste Schneide 3c eingebracht, wobei hier das erste oder ein drittes Werkzeug verwendet werden kann.

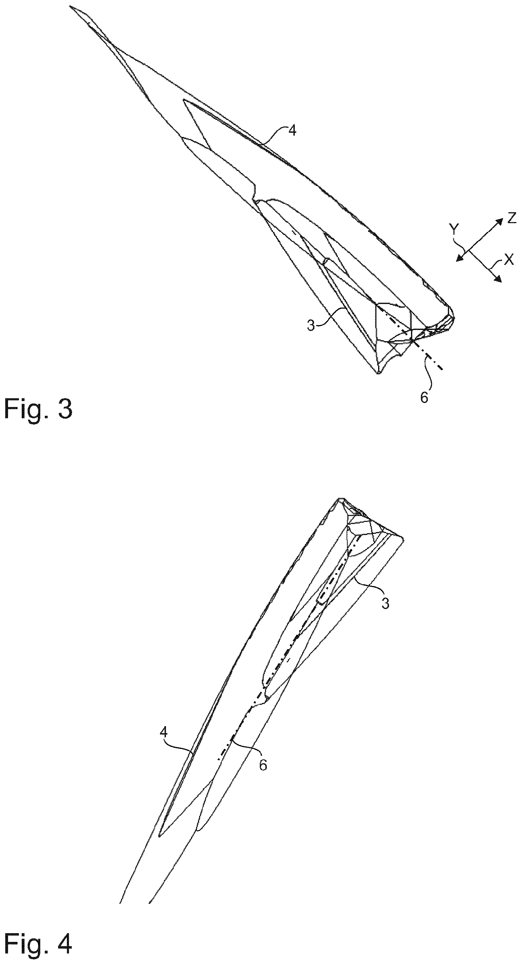

Die Figuren 3 und 4 zeigen zwei perspektivische Ansichten des erfindungsgemäßen Fräswerkzeugs 1 mit Schneiden 3 und 4 und Rotationsachse 6, wobei hier der Grundkörper 2 stark vereinfacht dargestellt wurde.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Fräswerkzeug
- 2: Grundkörper
- 2a: Werkzeugschneidenbereich
- 3,4: Schneide
- 3i, 4i: Startpunkt
- 3i', 4i': projizierter Startpunkt
- 6: Rotationsachse
- 7,8: Spannut
- 9: Drehrichtung
- 10, 11: Flugkreis
- 10d, 11d: Durchmesser
- 13, 14: Verbindungslinien
- 13', 14': projizierte Verbindungslinien
- 15a, 15b, 16a, 16b: Übergangsabschnitt
- 20: Stirnfläche
- 20a, 20b: Anteil
- 20u: Grenze
- E1, E2: Ebene
- L: Längsrichtung
- L2a: Länge
- L3, L4: Abschnitt
- m7, m8: Mantelfläche
- R: Radialrichtung
- t7, t8: Tiefe
- ω7, ω8: Öffnungswinkel

## Patentansprüche

1. Fräswerkzeug (1) zum spanenden Bearbeiten von Werkstücken mit einem als Rotationskörper ausgebildeten Grundkörper (2), umfassend genau eine erste (3) und genau eine zweite Schneide (4), welche jeweils sich zumindest teilweise spiralförmig um eine Rotationsachse (6) des Grundkörpers (2) in jeweils einem ersten oder zweiten Abschnitt (L3, L4) eines Werkzeugschneidenbereichs (2a) des Grundkörpers (2) erstreckend ausgebildet sind, wobei eine (4) der Schneiden (3, 4) linksspiralig und eine andere (3) der Schneiden (3, 4) rechtsspiralig verlaufend ausgestaltet ist, wobei in Richtung der Rotationsachse (6) des Grundkörpers (2) eine zweite Länge (24) des der zweiten Schneide (4) zugeordneten zweiten Abschnitts (L4) größer ist als eine erste Länge (23) des der ersten Schneide (3, 4) zugeordneten ersten Abschnitts (L3),
**dadurch gekennzeichnet, dass**
der erste Abschnitt (L3) in Richtung der Rotationsachse (6) des Grundkörpers (2) sich vollständig innerhalb des zweiten Abschnitts (L4) erstreckend angeordnet ist.

2. Fräswerkzeug (1) nach einem der Ansprüche 1 oder 2,
**dadurch gekennzeichnet, dass**
der erste Abschnitt (L3) und/ oder der zweite Abschnitt (L4) an eine Stirnfläche (20) im Werkzeugschneidenbereich (2a) des Fräswerkzeugs (1) angrenzend angeordnet sind.

3. Fräswerkzeug (1) nach einem der vorhergehenden Ansprüche,
**dadurch gekennzeichnet, dass**
in Bezug auf die Rotationsachse (6) ein erster Startpunkt (3i) der ersten Schneide (3) und ein zweiter Startpunkt (4i) der zweiten Schneide (4) auf gleicher Höhe angeordnet sind.

4. Fräswerkzeug (1) nach einem der vorhergehenden Ansprüche,
**dadurch gekennzeichnet, dass**
an einer Grenze (20u) zur Stirnfläche (20) die Rotationsachse (6), der erste Startpunkt (3i) und der zweite Startpunkt (4i) auf einer gemeinsamen Ebene (E2) angeordnet sind.

5. Fräswerkzeug (1) nach einem der vorhergehenden Ansprüche,
**dadurch gekennzeichnet, dass**
der zweite Abschnitt (L4) sich in Richtung der Rotationsachse (6) über eine Länge (L2a) des gesamten Werkzeugschneidenbereichs (2a) erstreckend angeordnet ist.

6. Fräswerkzeug (1) nach einem der vorhergehenden Ansprüche,
**dadurch gekennzeichnet, dass**
der ersten Schneide (3) eine erste Spannut (7) und der zweiten Schneide (4) eine zweite Spannut (8) zugeordnet ist, welche in Drehrichtung (9) des Fräswerkzeugs (1) den Schneiden (3, 4) jeweils unmittelbar vorgeordnet sind.

7. Fräswerkzeug (1) nach Anspruch 5,
**dadurch gekennzeichnet, dass**
eine erste Tiefe (t7) der ersten Spannut (7) und eine zweite Tiefe (t8) der zweiten Spannut (8) zumindest an der Grenze (20u) zur Stirnfläche (20) gleich ist.

8. Fräswerkzeug (1) nach einem der vorhergehenden Ansprüche,
**dadurch gekennzeichnet, dass**
ein erster Durchmesser (10d) eines der ersten Schneide (3) zugeordneten ersten Flugkreises (10) gleich groß ist wie ein zweiter Durchmesser (11 d) eines der zweiten Schneide (4) zugeordneten zweiten Flugkreises (11).

9. Fräswerkzeug (1, 11, 111) nach Anspruch 2,
**dadurch gekennzeichnet, dass**
die Stirnfläche (20) zumindest abschnittsweise, bevorzugt zur Gänze gegenüber der Rotationsachse (6) senkrecht angeordnet ist.

10. Fräswerkzeug (1) nach einem der vorangegangenen Ansprüche,
**dadurch gekennzeichnet, dass**
das Fräswerkzeug (1) zumindest anteilig aus mindestens einem der Werkstoffe ausgewählt aus der Gruppe zumindest bestehend aus Schnellarbeitsstahl (HSS), Hartmetall, Cermet und/oder ähnlichem besteht.
